(19) Europäisches Patentamt
European Patent Office
Office européen des brevets

(11) **EP 2 808 667 A1**

(12) **EUROPÄISCHE PATENTANMELDUNG**

(43) Veröffentlichungstag:
**03.12.2014 Patentblatt 2014/49**

(51) Int Cl.:
***G01M 99/00*** *(2011.01)* ***G01N 3/00*** *(2006.01)*

(21) Anmeldenummer: **13169639.5**

(22) Anmeldetag: **29.05.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Siemens Aktiengesellschaft
80333 München (DE)**

(72) Erfinder:
• **Amann, Christian
46238 Bottrop (DE)**
• **Kadau, Kai
Clover, 29710 (US)**

(54) **Verfahren zur Abschätzung von Risslängenfortschritten**

(57) Es wird ein Verfahren zur Abschätzung der Risslänge $\tilde{a}_{n+1}$ mindestens eines Risses (2) in einem Bauteil (1) beschrieben. Es umfasst die Schritte, dass zu einem ersten Zeitpunkt die Länge $\tilde{a}_n$ des Risses bestimmt wird, und die Länge des Risses $\tilde{a}_{n+1} = \tilde{a}_n + \Delta\tilde{a}_n$ zu einem zweiten Zeitpunkt unter Verwendung des Integrationsschemas

$$\tilde{a}_{n+1} = \tilde{a}_n + \frac{d\tilde{a}_1}{6} + \frac{d\tilde{a}_2}{3} + \frac{d\tilde{a}_3}{3} + \frac{d\tilde{a}_4}{6} \qquad (17)$$

$$d\tilde{a}_1 = dN\, f\left(\Delta K_n\right) \qquad (18)$$

$$d\tilde{a}_2 = dN\, f\left(\Delta K_n + \frac{1}{2}\frac{\Delta K_n}{2\tilde{a}_n}\, d\tilde{a}_1\right) \qquad (19)$$

$$d\tilde{a}_3 = dN\, f\left(\Delta K_n + \frac{1}{2}\frac{\Delta K_n}{2\tilde{a}_n}\, d\tilde{a}_2\right) \qquad (20)$$

$$d\tilde{a}_4 = dN\, f\left(\Delta K_n + \frac{\Delta K_n}{2\tilde{a}_n}\, d\tilde{a}_3\right) \qquad (21)$$

abgeschätzt wird, wobei $\Delta\tilde{a}_n$ die Zunahme der Rissgröße kennzeichnet, N die Anzahl der Zyklen kennzeichnet und K den Spannungsintensitätsfaktor kennzeichnet.

FIG 1

**Beschreibung**

Die vorliegende Erfindung betrifft ein Verfahren zur Abschätzung der Risslänge eines Risses in einem Bauteil, ein Verfahren zur Bestimmung der Versagenswahrscheinlichkeit eines Bauteils und die Verwendung eines solchen Verfahrens im Rahmen einer probabilistischen Bruchmechanikbewertung bzw. Bruchmechanikabschätzung. Die Erfindung betrifft zudem ein Verfahren zum Betreiben einer Turbine.

In vielen technischen und konstruktiven Anwendungen sind sich vergrößernde Risse oder Defekte in Bauteilen limitierende Faktoren für die Betriebsdauer und die Lebenszeit der jeweiligen Bauteile. Dies gilt insbesondere für Bauteile, die zyklischen Belastungen unterliegen, also beispielsweise zeitlich wechselnden thermischen und/oder mechanischen Belastungen ausgesetzt sind. Zum Beispiel sind Komponenten von Turbinensystemen, wie insbesondere in Gas- oder Dampfturbinen, bei der Inbetriebnahme oder dem Ausschalten der Turbine zeitlich variierenden thermischen Spannungen unterworfen.

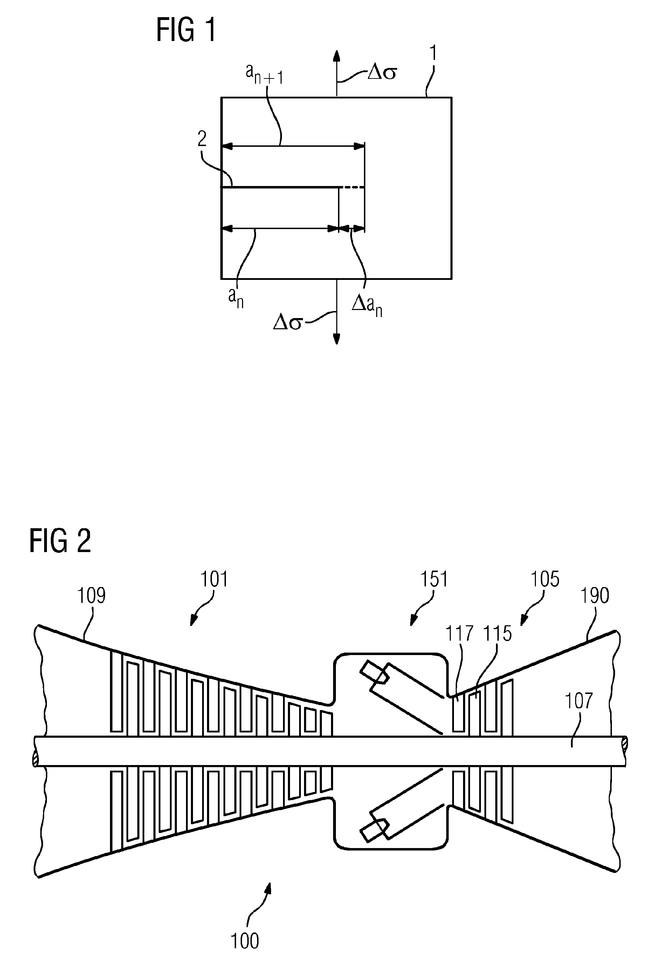

Die Lebensdauer eines solchen Bauteils oder einer solchen Komponente kann in vielen Fällen mithilfe einer Bestimmung oder Abschätzung des Risswachstums abgeschätzt werden. Dazu werden typischerweise verschiedene Rissöffnungsarten unterschieden. Ein Beispiel hierfür ist die Rissöffnungsart von Typ I oder Modus I (Mode I crack growth), bei der die Rissöffnung senkrecht zur Rissfläche erfolgt. Ein Beispiel hierfür ist in der Figur 1 gezeigt.

Die Figur 1 zeigt schematisch ein Bauteil 1 mit einem Riss 2. Senkrecht zur Rissfläche 2 wirkt eine Spannung $\sigma$. In der Figur 1 ist die Änderung der wirkenden Spannung $\Delta\sigma$ durch Pfeile gekennzeichnet. Das in der Figur 1 beispielhaft gezeigte Bauteil 1 hat eine rechteckige oder kubische Struktur bzw. eine rechteckige oder kubische Oberfläche. Grundsätzlich kann das Bauteil jede beliebige Form aufweisen.

Der Riss 2 hatte zunächst eine Länge $a_n$. In Folge der Spannung $\sigma$ vergrößert sich die Länge des Risses 2 nach einer bestimmten Beanspruchung oder einer bestimmten Betriebsdauer auf $a_{n+1} = a_n + \Delta a_n$. Die Rissöffnung senkrecht zur Rissfläche (Mode I) erfolgt mit einer Rissöffnungsrate $\frac{da}{dN}$, wobei N die durch-laufenen Zyklen kennzeichnet. Die Rissöffnungsrate wird typischerweise als Funktion f eines Bereichs der Spannungsintensität $\Delta K$ charakterisiert. Unter Zugrundelegung einer exponentiellen Abhängigkeit erhält man die Paris-Erdogan-Gleichung:

$$\frac{da}{dN} = f(\Delta K) = C\,\Delta K^m \qquad (1).$$

Dabei kennzeichnet a die Risslänge, N die Anzahl der Zyklen und $\Delta K$ den betrachteten Bereich der Spannungsintensität. C und m sind Materialkonstanten.

Bei der Berechnung von Versagenswahrscheinlichkeiten im Rahmen einer probabilistischen Bruchmechanikbewertung muss eine große Anzahl von Rissfortschrittsrechnungen durchgeführt werden. Typische Integrationsverfahren für die Berechnung der Rissgröße benötigen kleine Integrationsschrittweiten um eine konvergierte Lösung zu liefern. Bei zu großen Schrittweiten können diese Verfahren nicht konservative Lösungen für die Risslänge liefern. Durch die kleinen Integrationsschrittweiten kann es dazu kommen, dass die Berechnungszeiten so groß werden, dass es zeitlich nicht mehr sinnvoll möglich ist eine große Anzahl an Berechnungen durchzuführen.

Es ist eine Aufgabe der vorliegenden Erfindung, ein Verfahren zur Abschätzung der Risslänge eines Risses in einem Bauteil zur Verfügung zu stellen, welches zuverlässige konservative Lösungen für die Risslänge liefert und gleichzeitig eine Erhöhung der Integrationsschrittweiten ermöglicht. Eine weitere Aufgabe der vorliegenden Erfindung besteht darin, ein vorteilhaftes Verfahren zur Bestimmung der Versagenswahrscheinlichkeit eines Bauteils und eine vorteilhafte Verwendung eines solchen Verfahrens im Rahmen einer probabilistischen Bruchmechanikbewertung bzw. Bruchmechanikabschätzung zur Verfügung zu stellen. Darüber hinaus besteht eine Aufgabe der Erfindung darin, ein vorteilhaftes Verfahren zum Betreiben einer Turbine zur Verfügung zu stellen.

Die erste Aufgabe wird durch ein Verfahren zur Abschätzung der Risslänge eines Risses in einem Bauteil gemäß Patentanspruch 1 gelöst. Die zweite Aufgabe wird durch ein Verfahren zur Bestimmung der Versagenswahrscheinlichkeit eines Bauteils gemäß Patentanspruch 8 gelöst. Die dritte Aufgabe wird durch eine Verwendung eines der vorgenannten Verfahren zur Bestimmung der Versagenswahrscheinlichkeit eines Bauteils im Rahmen einer probabilistischen Bruchmechanikbewertung gemäß Patentanspruch 9 gelöst. Die vierte Aufgabe wird durch ein Verfahren zum Betreiben einer Turbine gemäß Patentanspruch 10 gelöst. Die abhängigen Ansprüche enthalten weitere, vorteilhafte Ausgestaltungen der Erfindung.

Das erfindungsgemäße Verfahren zur Abschätzung, insbesondere zur konservativen Abschätzung, der Risslänge $\tilde{a}_{n+1}$ mindestens eines Risses in einem Bauteil umfasst die folgenden Schritte: Zu einem ersten Zeitpunkt wird die Länge $\tilde{a}_n$ des Risses bestimmt, insbesondere gemessen. Die Länge des Risses $\tilde{a}_{n+1} = \tilde{a}_n + \Delta\tilde{a}_n$ zu einem zweiten,

insbesondere bestimmbaren späteren, Zeitpunkt wird unter Verwendung des Integrationsschemas

$$\tilde{a}_{n+1} = \tilde{a}_n + \frac{d\tilde{a}_1}{6} + \frac{d\tilde{a}_2}{3} + \frac{d\tilde{a}_3}{3} + \frac{d\tilde{a}_4}{6} \qquad (17)$$

$$d\tilde{a}_1 = dN\, f\left(\Delta K_n\right) \qquad (18)$$

$$d\tilde{a}_2 = dN\, f\left(\Delta K_n + \frac{1}{2}\frac{\Delta K_n}{2\tilde{a}_n}\, d\tilde{a}_1\right) \qquad (19)$$

$$d\tilde{a}_3 = dN\, f\left(\Delta K_n + \frac{1}{2}\frac{\Delta K_n}{2\tilde{a}_n}\, d\tilde{a}_2\right) \qquad (20)$$

$$d\tilde{a}_4 = dN\, f\left(\Delta K_n + \frac{\Delta K_n}{2\tilde{a}_n}\, d\tilde{a}_3\right) \qquad (21)$$

abgeschätzt, wobei $\Delta\tilde{a}_n$ die Zunahme der Rissgröße kennzeichnet, N die Anzahl der Zyklen kennzeichnet und K den Spannungsintensitätsfaktor kennzeichnet.

Das erfindungsgemäße Verfahren hat den Vorteil, dass es eine konservative Abschätzung der Rissgröße auch bei sehr großen Integrationsschrittweiten ermöglicht. Durch die konservative Rissgrößenberechnung bei großen Integrationsschrittweiten ist es möglich ein schnelles Prescreening der zu berechnenden Rissgrößen durchzuführen und die Anzahl der Risse zu reduzieren, welche mit erhöhter Präzision berechnet werden müssen.

Das erfindungsgemäße Verfahren benutzt einen modifizierten Runge-Kutta Algorithmus, der im Vergleich zu dem klassischen Runge-Kutta Algorithmus der 4. Ordnung größere Rissgrößen liefert und zudem bei kleiner werdenden Integrationsschrittweiten dN zu dem regulären Runge-Kutta-Schema und somit zur exakten Lösung für die Rissgröße konvergiert.

Im Rahmen des erfindungsgemäßen Verfahrens kann der Spannungsintensitätsfaktor mithilfe von experimentell ermittelten, beispielsweise interpolierten, Messdaten bestimmt werden. Zum Beispiel kann der Spannungsintensitätsfaktor mithilfe eines Geometriefaktors Y(a) und einer Spannung σ bestimmt werden. Ein Bereich des Spannungsintensitätsfaktors ΔK kann mithilfe des Geometriefaktors Y(a) und eines Spannungsbereichs Δσ gemäß

$$\Delta K = \Delta\sigma\, \sqrt{\pi a}\, Y(a) \qquad (2)$$

bestimmt werden.

Zudem kann im Rahmen des erfindungsgemäßen Verfahrens die Funktion f als positiv monoton ansteigende Funktion und/oder die Risslänge a größer oder gleich Null $a \geq 0$ und/oder der Geometriefaktor Y größer oder gleich Null $Y \geq 0$ und/oder der Spannungsbereich Δσ größer oder gleich Null $\Delta\sigma \geq 0$ festgelegt werden.

Vorzugsweise kann die Risslänge eines Risses in einem Bauteil einer Gasturbine, zum Beispiel die Risslänge eines Risses in einem Bauteil des Rotors einer Gasturbine, abgeschätzt werden. Bei dem Bauteil des Rotors kann es sich vorzugsweise um eine Turbinenschaufel, beispielsweise eine Leitschaufel oder eine Laufschaufel, oder eine Welle handeln.

Das erfindungsgemäße Verfahren zur Bestimmung oder Ermittlung, zum Beispiel zur Berechnung, der Versagenswahrscheinlichkeit eines Bauteils zeichnet sich dadurch aus, dass die Risslänge eines Risses in dem Bauteil mithilfe des zuvor beschriebenen Verfahrens abgeschätzt wird und die Versagenswahrscheinlichkeit des Bauteils auf der Grundlage der abgeschätzten Risslänge bestimmt wird.

Im Rahmen der erfindungsgemäßen Verwendung wird eines der zuvor beschriebenen Verfahren zur Bestimmung oder Ermittlung, insbesondere zur Berechnung, der Versagenswahrscheinlichkeit eines Bauteils im Rahmen einer probabilistischen Bruchmechanikbewertung bzw. Bruchmechanikabschätzung des Bauteils benutzt. Die Begriffe Bruchmechanikbewertung und Bruchmechanikabschätzung werden im Rahmen der vorliegenden Erfindung synonym verwendet und beinhalten inhaltlich eine objektive Bewertung der Eigenschaften des jeweiligen Bauteils.

Das erfindungsgemäße Verfahren zur Bestimmung der Versagenswahrscheinlichkeit eines Bauteils und die erfindungsgemäße Verwendung eines der vorgenannten Verfahren haben grundsätzlich dieselben Vorteile wie das erfindungsgemäße Verfahren zur Abschätzung der Risslänge.

Das erfindungsgemäße Verfahren zum Betreiben einer Turbine umfasst die folgenden Schritte: Mindestens ein Bauteil der Turbine wird auf das Vorhandensein mindestens eines Risses oder Defekts untersucht. Falls ein Riss oder Defekt ermittelt wird, wird die Ausgangslänge des Risses oder Defekts bestimmt. Die Länge des Risses zu einem zweiten Zeitpunkt, insbesondere bestimmbaren späteren Zeitpunkt, wird gemäß dem oben beschriebenen Verfahren abgeschätzt. Falls die abgeschätzte Risslänge einen festgesetzten Wert erreicht oder überschreitet, wird das Bauteil zu einem festgelegten Zeitpunkt ausgetauscht und/oder repariert.

Falls die abgeschätzte Risslänge einen festgesetzten Selektionswert erreicht oder überschreitet, wobei der Selektionswert kleiner als der Grenzwert ist, kann der Riss oder Defekt zudem einer genaueren Untersuchung oder Abschätzung der Risslänge unterzogen werden. Eine genauere Abschätzung kann beispielsweise mithilfe des oben beschriebenen Verfahrens unter Verwendung kleinerer Integrationsschritte erfolgen.

Die Untersuchung des Bauteils auf Risse oder Defekte kann zum Beispiel mit optischen oder akustischen Verfahren erfolgen. Bei der Turbine kann es sich um eine Gasturbine oder eine Dampfturbine handeln.

Vorzugsweise liegt der Zeitpunkt, an dem das Bauteil repariert und/oder ausgetauscht wird, nach dem im Rahmen der Abschätzung der Rissgröße ermittelten zweiten Zeitpunkt. Grundsätzlich ist es im Rahmen der vorliegenden Erfindung ausreichend, wenn der zweite oder spätere Zeitpunkt bestimmbar ist, also zum Beispiel nach einer bestimmten Anzahl von definierten Betriebszyklen der das Bauteil umfassenden Maschine erreicht wird. Der zweite Zeitpunkt muss also nicht von Anfang an in Form eines konkreten Datums oder einer bestimmten Uhrzeit feststehen.

Im Rahmen des erfindungsgemäßen Verfahrens zum Betreiben einer Turbine können auch das oben beschriebene Verfahren zur Bestimmung der Versagenswahrscheinlichkeit eines Bauteils und/oder die Verwendung der beschriebenen Verfahren zur Bestimmung der Versagenswahrscheinlichkeit eines Bauteils im Rahmen einer probabilistischen Bruchmechanikbewertung bzw. Bruchmechanikabschätzung des Bauteils Anwendung finden.

Für viele Anwendungen ist die Rissgröße als solche von untergeordnetem Interesse. Die entscheidende Information besteht darin, ob der Riss kleiner ist als eine bestimmte kritische Größe nachdem eine vorgegebene Anzahl von Zyklen, beispielsweise bestimmte Betriebszyklen oder eine bestimmte Betriebsdauer oder Betriebsbelastung einer Maschine, wie beispielsweise einer Gasturbine, durchlaufen wurde. Vor diesem Hintergrund ist die vorliegende Erfindung insofern vorteilhaft, als im Rahmen der Durchführung der beschriebenen Verfahren die Rissgröße überschätzt bzw. zu hoch abgeschätzt wird und schließlich zu der exakten Rissgröße bei der Verwendung von kleinen Schrittgrößen konvergiert.

Zudem kann mithilfe der zuvor beschriebenen erfindungsgemäßen Verfahren die Zeit zur Durchführung einer probabilistischen Bruchmechanikbewertung, insbesondere die Zeit zur Bestimmung und Berechnung des Fortschreitens der Rissbildung, erheblich reduziert werden. Die erfindungsgemäßen Verfahren können insbesondere dazu benutzt werden, vorhandene Risse danach zu beurteilen und auszuwählen, welche der Risse überhaupt detaillierter untersucht werden müssen. In der Regel ist nur ein geringer Anteil der Risse so beschaffen, dass eine detailliertere Untersuchung erforderlich ist. Diese Risse, die möglicherweise zu einem Versagen bzw. einer Zerstörung des Bauteils führen können, können anschließend detaillierter unter Verwendung kleinerer Integrationsschrittgrößen untersucht werden.

Weitere Merkmale, Vorteile und Eigenschaften der vorliegenden Erfindung werden im Folgenden anhand von Ausführungsbeispielen hier beschrieben. Alle bisher und im Folgenden beschriebenen Merkmale können dabei in beliebiger Kombination miteinander verwendet werden. Die folgende Beschreibung der Ausführungsbeispiele stellt keine Einschränkung der vorliegenden Erfindung dar.

Figur 1    zeigt schematisch ein Bauteil mit einem sich vergrößernden Riss.

Figur 2    zeigt schematisch eine Gasturbine.

Die Figur 1 wurde bereits im Rahmen der Beschreibungseinleitung erläutert, sodass diesbezüglich auf die oben gemachten Ausführungen verwiesen wird.

Grundlage für die Abschätzung der Rissgröße gemäß dem erfindungsgemäßen Verfahren ist der klassische Runge-Kutta-Algorithmus der 4. Ordnung:

$$a_{n+1} = a_n + \Delta a_n \tag{9}$$

$$a_{n+1} = a_n + \frac{da_1}{6} + \frac{da_2}{3} + \frac{da_3}{3} + \frac{da_4}{6} \tag{10}$$

$$da_1 = dN\, f\left(\Delta\sigma\, Y(a)\ \sqrt{\pi\, a_n}\right) \tag{11}$$

$$da_2 = dN\, f\left(\Delta\sigma\, Y(a)\ \sqrt{\pi\left(a_n + \frac{1}{2}\, da_1\right)}\right) \tag{12}$$

$$da_3 = dN\, f\left(\Delta\sigma\, Y(a)\ \sqrt{\pi\left(a_n + \frac{1}{2}\, da_2\right)}\right) \tag{13}$$

$$da_4 = dN\, f\left(\Delta\sigma\, Y(a)\ \sqrt{\pi\left(a_n + da_3\right)}\right) \tag{14}$$

Die Anzahl der Zyklen N und die Risslänge schreiten in jedem Integrationszyklus um den Integrationsschritt dN fort.

Im Rahmen der erfindungsgemäßen Verfahren wird das folgende Integrationsschema verwendet:

$$\tilde{a}_{n+1} = \tilde{a}_n + \frac{d\tilde{a}_1}{6} + \frac{d\tilde{a}_2}{3} + \frac{d\tilde{a}_3}{3} + \frac{d\tilde{a}_4}{6} \tag{17}$$

$$d\tilde{a}_1 = dN\, f\left(\Delta K_n\right) \tag{18}$$

$$d\tilde{a}_2 = dN\, f\left(\Delta K_n + \frac{1}{2}\frac{\Delta K_n}{2\tilde{a}_n} d\tilde{a}_1\right) \tag{19}$$

$$d\tilde{a}_3 = dN\, f\left(\Delta K_n + \frac{1}{2}\frac{\Delta K_n}{2\tilde{a}_n} d\tilde{a}_2\right) \tag{20}$$

$$d\tilde{a}_4 = dN\, f\left(\Delta K_n + \frac{\Delta K_n}{2\tilde{a}_n} d\tilde{a}_3\right) \tag{21}$$

Die Rissgröße a bzw. Risslänge a stellt bei jedem Zwischenschritt der Integrationsschritte in den Gleichungen (10) bis (14) eine diskrete Risslänge dar. In den Gleichungen (18) bis (21) ist die Risslänge als ã gekennzeichnet. Da die Risslänge a eine monoton wachsende Funktion darstellt, ist die Spannungsintensität im Rahmen des erfindungsgemäßen Verfahrens im Vergleich zu einer klassischen Runge-Kutta-Integration gemäß der Gleichungen (10) bis (14) zu hoch abgeschätzt. Dies hat den Vorteil, dass das Erreichen der jeweiligen kritischen Rissgröße in jedem Fall rechtzeitig, also bereits bevor der Riss die kritische Rissgröße auch tatsächlich erreicht, im Vorhinein abgeschätzt werden kann.

Im Folgenden wird gezeigt, dass der im Rahmen des erfindungsgemäßen Verfahrens verwendete modifizierte Runge-Kutta-Algorithmus zu größeren Rissgrößen im Vergleich zu einem klassischen Runge-Kutta-Algorithmus der 4. Ordnung führt und mit kleineren Integrationsschritten dN sich dem klassischen Runge-Kutta-Schema und somit der exakten Lösung annähert.

Es wird angenommen, dass f eine positive monoton wachsende Funktion ist, die Risslänge $a \geq 0$ ist, der Geometriefaktor $Y \geq 0$ ist und der Spannungsbereich $\Delta\sigma \geq 0$ ist. Im Allgemeinen werden diese Randbedingungen bzw. Beschränkungen bei altersbedingtem Risswachstum erfüllt. Zusätzlich werden die Anfangsrissgrößen zum Vergleich der beiden Algorithmen als gleich groß angesetzt, nämlich $a_0 = \tilde{a}_0$.

Die Gleichungen (10) und (17) sind bis auf die unterschiedlichen Bezeichnungen der Risslänge $(a \to \tilde{a})$ identisch. Die Gleichungen (11) und (18) sind ebenfalls identisch, wobei lediglich $\Delta K$ gemäß Gleichung (2) substituiert wurde. Die Gleichungen für $da_2$, $da_3$ und $da_4$ unterscheiden sich von den Gleichungen für $d\tilde{a}_2$, $d\tilde{a}_3$ und $d\tilde{a}_4$.

Um zu beweisen, dass $\tilde{a}_{n+1} \geq a_{n+1}$ müssen die einzelnen Summanden betrachtet werden. Da dN in beiden Integrationsschemen identisch ist und f eine positive monoton wachsende Funktion ist, müssen lediglich die Verhältnisse der jeweiligen Argumente in den Gleichungen (12) und (19), (13) und (20), und (14) und (21) analysiert werden.

Zunächst soll das Verhältnis der Argumente der Gleichungen (12) und (19) untersucht werden und dabei die folgende Ungleichung bewiesen werden:

$$\frac{\Delta\sigma\, Y\, \sqrt{\pi\left(a_0 + \frac{1}{2}da_1\right)}}{\Delta K_0 + \frac{1}{2}\frac{\Delta K_0}{2a_0} d\tilde{a}_1} \leq 1 \tag{22}$$

Dabei wurde $\Delta K$ mithilfe von Gleichung (2) substituiert.

$$\frac{\sqrt{a_0 + \frac{1}{2}da_1}}{\sqrt{a_0}\left(1 + \frac{d\tilde{a}_1}{4a_0}\right)} \leq 1 \tag{23}$$

Alle Werte sind positiv und die Wurzel hat keinen Einfluss auf die Ungleichung.

$$\frac{16a_0^2 + 8a_0\,da_1}{16a_0^2 + 8a_0\,d\tilde{a}_1 + d\tilde{a}_1^2} \leq 1 \qquad\qquad (24)$$

Wie bereits erwähnt, ist $da_1 = d\tilde{a}_1$, womit die Ungleichung (24) bewiesen ist. Das Argument der Funktion in dem modifizierten Runge-Kutta-Algorithmus ist um $d\tilde{a}_1^2$ größer als in dem klassischen Runge-Kutta-Algorithmus. Da f eine monoton wachsende Funktion ist, gilt $da_2 \leq d\tilde{a}_2$ und $d\tilde{a}_2$ konvergiert zu $da_2$ mit kleiner werdendem dN.

Ähnliche Analysen können für die Gleichungen (13) und (20) und für die Gleichungen (14) und (21) durchgeführt werden. Da alle Summanden der Gleichung (17) größer oder gleich den korrespondierenden Summanden der Gleichung (10) sind, ist auch die Summe des modifizierten Algorithmus (17) größer oder gleich der Summe des klassischen Runge-Kutta-Algorithmus 4. Ordnung.

Auf ähnliche Weise kann gezeigt werden, dass mit kleiner werdenden Integrationsschritten dN die durch den modifizierten Runge-Kutta-Algorithmus abgeschätzten Rissgrößen $a_{n+1}$ gegen $a_{n+1}$ konvergieren, solange $\|f(\Delta K)\| < \infty$. Demgemäß konvergiert der klassische Runge-Kutta-Algorithmus 4. Ordnung gegen das korrekte Ergebnis und damit auch der im Rahmen des erfindungsgemäßen Verfahrens verwendete modifizierte Algorithmus.

Das erfindungsgemäße Verfahren kann zum Beispiel zur Bestimmung, insbesondere Berechnung, der Rissgröße von einem oder mehreren Rissen in einer Komponente einer Gasturbine, zum Beispiel dem Rotor oder dessen Bauteilen, genutzt werden.

Die Figur 2 zeigt schematisch eine Gasturbine 100. Eine Gasturbine 100 weist im Inneren einen um eine Rotationsachse drehgelagerten Rotor mit einer Welle 107 auf, der auch als Turbinenläufer bezeichnet wird. Entlang des Rotors folgen aufeinander ein Ansauggehäuse 109, ein Verdichter 101, eine Brenneranordnung 15, eine Turbine 105 und das Abgasgehäuse 190.

Die Brenneranordnung 15 kommuniziert mit einem beispielsweise ringförmigen Heißgaskanal. Dort bilden mehrere hintereinander geschaltete Turbinenstufen die Turbine 105. Jede Turbinenstufe ist aus Schaufelringen gebildet. In Strömungsrichtung eines Arbeitsmediums gesehen folgt im Heißgaskanal einer Leitschaufelreihe 117 eine aus Laufschaufeln 115 gebildete Reihe. Die Leitschaufeln 117 sind dabei an einem Innengehäuse eines Stators befestigt, wohingegen die Laufschaufeln 115 einer Reihe beispielsweise mittels einer Turbinenscheibe am Rotor angebracht sind. An dem Rotor angekoppelt ist ein Generator oder eine Arbeitsmaschine.

Während des Betriebes der Gasturbine wird vom Verdichter 101 durch das Ansauggehäuse 109 Luft angesaugt und verdichtet. Die am turbinenseitigen Ende des Verdichters 101 bereitgestellte verdichtete Luft wird zu den Brenneranordnungen 15 geführt und dort mit einem Brennstoff vermischt. Das Gemisch wird dann unter Bildung des Arbeitsmediums in der Brennkammer verbrannt. Von dort aus strömt das Arbeitsmedium entlang des Heißgaskanals an den Leitschaufeln 117 und den Laufschaufeln 115 vorbei. An den Laufschaufeln 115 entspannt sich das Arbeitsmedium impulsübertragend, so dass die Laufschaufeln 115 den Rotor antreiben und dieser die an ihn angekoppelte Arbeitsmaschine.

Bei der im Rahmen des erfindungsgemäßen Verfahrens zu untersuchenden Komponente bzw. dem Bauteil kann es sich zum Beispiel um die Welle 107, eine oder mehrere Leitschaufeln 117, oder eine oder mehrere Laufschaufeln 115 handeln. Zur Durchführung des erfindungsgemäßen Verfahrens wird zu einem ersten Zeitpunkt die Länge $\tilde{a}_n$ des zu untersuchenden Risses bestimmt, zum Beispiel gemessen. Anschließend wird die Länge des Risses $\tilde{a}_{n+1} = \tilde{a}_n + \Delta\tilde{a}_n$ zu einem zweiten, vorzugsweise späteren Zeitpunkt unter Verwendung des Integrationsschemas

$$\tilde{a}_{n+1} = \tilde{a}_n + \frac{d\tilde{a}_1}{6} + \frac{d\tilde{a}_2}{3} + \frac{d\tilde{a}_3}{3} + \frac{d\tilde{a}_4}{6} \qquad\qquad (17)$$

$$d\tilde{a}_1 = dN\,f(\Delta K_n) \qquad\qquad (18)$$

$$d\tilde{a}_2 = dN\, f\left(\Delta K_n + \frac{1}{2}\frac{\Delta K_n}{2\tilde{a}_n}\, d\tilde{a}_1\right) \qquad (19)$$

$$d\tilde{a}_3 = dN\, f\left(\Delta K_n + \frac{1}{2}\frac{\Delta K_n}{2\tilde{a}_n}\, d\tilde{a}_2\right) \qquad (20)$$

$$d\tilde{a}_4 = dN\, f\left(\Delta K_n + \frac{\Delta K_n}{2\tilde{a}_n}\, d\tilde{a}_3\right) \qquad (21)$$

abgeschätzt. Vorteilhafterweise können zunächst eine Vielzahl von Rissen mit geringem Aufwand, also unter Verwendung großer Integrationsschrittweiten, im Hinblick auf den Fortschritt der einzelnen Rissgrößen untersucht werden. Nach dieser ersten Abschätzung können die Risse, deren Rissgröße nach dem Ergebnis der ersten Abschätzung einen zuvor festgelegten Grenzwert für unkritische Rissgrößen überschreitet, einer weiteren, genaueren Untersuchung unterzogen werden. Dies kann beispielsweise durch eine weitere Abschätzung unter Verwendung des zuvor beschriebenen Algorithmus mit kleineren Integrationsschrittweiten als bei der ersten Abschätzung erfolgen.

Ein Verfahren zur probabilistischen Abschätzung oder Bewertung der Bruchmechanik oder der Lebensdauer eines Bauteils, beispielsweise eines Bauteils einer Gasturbine, kann zum Beispiel die folgenden Schritte umfassen: Eine Anzahl potentieller Defekte oder Risse der Komponente werden auf der Basis von Streuungsmessdaten bezüglich der Materialeigenschaften und Streuungsmessdaten bezüglich Defekten definiert. Dabei wird jeder potentielle Defekt mit Hilfe einer möglichen Materialeigenschaft und einem Merkmal für die Defektgröße oder Rissgröße in Bezug auf die Komponente definiert.

Die Position jedes potentiellen Defekts auf der Komponente wird bestimmt und es wird ermittelt, ob er nach einer vorgegebenen Anzahl von Zyklen, beispielsweise Betriebszyklen der die Komponente umfassenden Maschine, auf der Basis von Rissfortschrittsberechnungen zum Versagen der Komponente führen könnte. Die Rissfortschrittsberechnungen können auf der Basis von den Materialeigenschaften der Komponente und den Eigenschaften des Defekts bzw. des Risses erfolgen. Ein Versagen der Komponente wird angenommen, wenn das Defektwachstum oder Risswachstum als instabil verlaufend bestimmt wurde. Die Gesamtzahl der potentiellen Defekte, die nach einer bestimmten Anzahl N von Zyklen zum Versagen führen könnten wird bestimmt. Damit ist die Versagenswahrscheinlichkeit der Komponente nach N Zyklen ermittelt.

**Patentansprüche**

1. Verfahren zur Abschätzung der Risslänge $\tilde{a}_{n+1}$ mindestens eines Risses (2) in einem Bauteil (1),
   **dadurch gekennzeichnet, dass**
   es die folgenden Schritte umfasst:

   - zu einem ersten Zeitpunkt die Länge $\tilde{a}_n$ des Risses bestimmt wird, und
   - die Länge des Risses $\tilde{a}_{n+1} = \tilde{a}_n + \Delta\tilde{a}_n$ zu einem zweiten Zeitpunkt unter Verwendung des Integrationsschemas

$$\tilde{a}_{n+1} = \tilde{a}_n + \frac{d\tilde{a}_1}{6} + \frac{d\tilde{a}_2}{3} + \frac{d\tilde{a}_3}{3} + \frac{d\tilde{a}_4}{6} \qquad (17)$$

$$d\tilde{a}_1 = dN\, f\left(\Delta K_n\right) \tag{18}$$

$$d\tilde{a}_2 = dN\, f\left(\Delta K_n + \frac{1}{2}\frac{\Delta K_n}{2\tilde{a}_n}\, d\tilde{a}_1\right) \tag{19}$$

$$d\tilde{a}_3 = dN\, f\left(\Delta K_n + \frac{1}{2}\frac{\Delta K_n}{2\tilde{a}_n}\, d\tilde{a}_2\right) \tag{20}$$

$$d\tilde{a}_4 = dN\, f\left(\Delta K_n + \frac{\Delta K_n}{2\tilde{a}_n}\, d\tilde{a}_3\right) \tag{21}$$

abgeschätzt wird, wobei $\Delta\tilde{a}_n$ die Zunahme der Rissgröße kennzeichnet, N die Anzahl der Zyklen kennzeichnet und K den Spannungsintensitätsfaktor kennzeichnet.

2. Verfahren nach Anspruch 1,
   **dadurch gekennzeichnet, dass**
   der Spannungsintensitätsfaktor mithilfe von experimentell ermittelten Messdaten bestimmt wird.

3. Verfahren nach Anspruch 1 oder Anspruch 2,
   **dadurch gekennzeichnet, dass**
   der Spannungsintensitätsfaktor mithilfe eines Geometriefaktors Y(a) und einer Spannung $\sigma$ bestimmt wird.

4. Verfahren nach Anspruch 3,
   **dadurch gekennzeichnet, dass**
   ein Bereich des Spannungsintensitätsfaktors $\Delta K$ mithilfe eines Geometriefaktors Y(a) und eines Spannungsbereichs $\Delta\sigma$ gemäß

$$\Delta K = \Delta\sigma\, \sqrt{\pi a}\, Y(a) \tag{2}$$

bestimmt wird.

5. Verfahren nach einem der Ansprüche 1 bis 4,
   **dadurch gekennzeichnet, dass**
   die Funktion f als positiv monoton ansteigende Funktion und/oder die Risslänge a≥0 und/oder der Geometriefaktor Y≥0 und/oder der Spannungsbereich $\Delta\sigma$≥0 festgelegt wird.

6. Verfahren nach einem der Ansprüche 1 bis 5,
   **dadurch gekennzeichnet, dass**
   die Risslänge eines Risses in einem Bauteil (1) einer Gasturbine abgeschätzt wird.

7. Verfahren nach Anspruch 6,
   **dadurch gekennzeichnet, dass**
   die Risslänge eines Risses in einem Bauteil (1) des Rotors einer Gasturbine abgeschätzt wird.

**8.** Verfahren zur Bestimmung der Versagenswahrscheinlichkeit eines Bauteils (1),
**dadurch gekennzeichnet, dass**
die Risslänge eines Risses in dem Bauteil (1) mithilfe eines Verfahrens nach einem der Ansprüche 1 bis 7 abgeschätzt wird und die Versagenswarscheinlichkeit des Bauteils (1) auf der Grundlage der abgeschätzten Risslänge bestimmt wird.

**9.** Verwendung eines Verfahrens nach einem der Ansprüche 1 bis 8 zur Bestimmung der Versagenswahrscheinlichkeit eines Bauteils im Rahmen einer probabilistischen Bruchmechanikbewertung des Bauteils.

**10.** Verfahren zum Betreiben einer Turbine,
**dadurch gekennzeichnet, dass**

- mindestens ein Bauteil der Turbine auf das Vorhandensein mindestens eines Risses oder Defekts untersucht wird,
- falls ein Riss oder Defekt ermittelt wird die Ausgangslänge des Risses oder Defekts bestimmt wird,
- die Länge des Risses zu einem zweiten Zeitpunkt gemäß einem Verfahren nach einem der Ansprüche 1 bis 7 abgeschätzt wird, und
- falls die abgeschätzte Risslänge einen festgesetzten Grenzwert erreicht oder überschreitet, das Bauteil zu einem festgelegten Zeitpunkt ausgetauscht und/oder repariert wird.

**11.** Verfahren nach Anspruch 10,
**dadurch gekennzeichnet, dass**
falls die abgeschätzte Risslänge einen festgesetzten Selektionswert erreicht oder überschreitet, wobei der Selektionswert kleiner als der Grenzwert ist, der Riss oder Defekt einer genaueren Untersuchung oder Abschätzung der Risslänge unterzogen wird.

**12.** Verfahren nach Anspruch 10 oder Anspruch 11,
**dadurch gekennzeichnet, dass**
es sich bei der Turbine um eine Gasturbine oder eine Dampfturbine handelt.

**13.** Verfahren nach einem der Ansprüche 10 bis 13,
**dadurch gekennzeichnet, dass**
der Zeitpunkt, an dem das Bauteil ausgetauscht und/oder repariert wird, nach dem im Rahmen der Abschätzung der Rissgröße ermittelten zweiten Zeitpunkt liegt.

## FIG 1

$a_{n+1}$

$\Delta\sigma$

1

2

$a_n$

$\Delta\sigma$

$\Delta a_n$

## FIG 2

109  101  151  105  190

117  115

107

100

Europäisches Patentamt
European Patent Office
Office européen des brevets

**EUROPÄISCHER RECHERCHENBERICHT**

Nummer der Anmeldung

EP 13 16 9639

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | ZORAN PEROVIC: "COMPUTER SIMULATION OF CUMULATIVE FATIGUE DAMAGE", FACTA UNIVERSITATIS - MECHANICAL ENGINEERING, Bd. 1, Nr. 9, 2002, Seiten 1231-1239, XP055089623, * das ganze Dokument * ----- | 1-13 | INV. G01M99/00 G01N3/00 |
| A | LIU Y ET AL: "Probabilistic fatigue life prediction using an equivalent initial flaw size distribution", INTERNATIONAL JOURNAL OF FATIGUE, BUTTERWORTH SCIENTIFIC LTD, GUILDFORD, GB, Bd. 31, Nr. 3, 1. März 2009 (2009-03-01), Seiten 476-487, XP025679426, ISSN: 0142-1123, DOI: 10.1016/J.IJFATIGUE.2008.06.005 [gefunden am 2008-07-04] * das ganze Dokument * ----- | 1-13 | |
| A | ZHANG ET AL: "A precise Runge-Kutta integration and its application for solving nonlinear dynamical systems", APPLIED MATHEMATICS AND COMPUTATION, ELSEVIER, US, Bd. 184, Nr. 2, 31. Januar 2007 (2007-01-31), Seiten 496-502, XP005868434, ISSN: 0096-3003, DOI: 10.1016/J.AMC.2006.06.054 * Seite 497 - Seite 498 * ----- | 1-13 | RECHERCHIERTE SACHGEBIETE (IPC) G01M G01N |
| A | EP 2 172 761 A1 (MITSUBISHI HEAVY IND LTD [JP]) 7. April 2010 (2010-04-07) * Absatz [0037] - Absatz [0054] * ----- | 1-13 | |

Der vorliegende Recherchenbericht wurde für alle Patentansprüche erstellt

| Recherchenort | Abschlußdatum der Recherche | Prüfer |
|---|---|---|
| Den Haag | 21. November 2013 | Reto, Davide |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 13 16 9639

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-11-2013

| Im Recherchenbericht angeführtes Patentdokument | Datum der Veröffentlichung | Mitglied(er) der Patentfamilie | Datum der Veröffentlichung |
|---|---|---|---|
| EP 2172761 A1 | 07-04-2010 | CN 101652649 A | 17-02-2010 |
| | | EP 2172761 A1 | 07-04-2010 |
| | | JP 4202400 B1 | 24-12-2008 |
| | | JP 2009031124 A | 12-02-2009 |
| | | KR 20090122977 A | 01-12-2009 |
| | | US 2010116062 A1 | 13-05-2010 |
| | | WO 2009017013 A1 | 05-02-2009 |

EPO FORM P0461

Für nähere Einzelheiten zu diesem Anhang : siehe Amtsblatt des Europäischen Patentamts, Nr.12/82